# EUROPÄISCHE PATENTSCHRIFT

(11) **EP 2 483 662 B1**
(45) Veröffentlichungstag und Bekanntmachung des Hinweises auf die Patenterteilung: **15.07.2020**
(21) Anmeldenummer: 10776077.9
(22) Anmeldetag: 27.09.2010
(51) Int. Cl.: G01N 15/08, B01D 65/10, B01D 65/00

(54) **ABDICHTUNGSSYSTEM FÜR EINE FLUID ENTHALTENDE KAMMER**
SEALING SYSTEM FOR A CHAMBER CONTAINING FLUID
SYSTÈME D'ÉTANCHÉIFICATION POUR UNE CHAMBRE CONTENANT UN FLUIDE

(30) Priorität: 30.09.2009 DE 102009048607
(43) Veröffentlichungstag der Anmeldung: 08.08.2012
(73) Patentinhaber: Fraunhofer-Gesellschaft zur Förderung der angewandten Forschung e.V., 80686 München (DE)
(72) Erfinder: BEESE, Harald, 01705 Dresden (DE); GRÜBLER, Johannes, 01665 Käbschütztal (DE); GRÄHLERT, Wulf, 01277 Dresden (DE); KASKEL, Stefan, 01159 Dresden (DE)
(74) Vertreter: Pfenning, Meinig & Partner mbB
(86) Internationale Anmeldenummer: PCT/DE2010/001177
(87) Internationale Veröffentlichungsnummer: WO 2011/038728

(56) Entgegenhaltungen:
- WO-A1-2011/026879
- DE-A1-102008 056 634
- FR-A1- 2 715 471
- US-A- 3 431 772
- US-A- 3 590 634
- US-A- 3 618 361
- US-A- 4 304 122
- US-A1- 2008 060 418

## Beschreibung

Die Erfindung betrifft ein Abdichtungssystem einer Vorrichtung zur Bestimmung einer Permeationsrate oder einer Desorptionsrate mit Fluide enthaltender Kammer. Sie kann für die Bestimmung der Konzentration von in einem Fluid enthaltenen Stoffen innerhalb der jeweiligen Kammer genutzt werden. Die Konzentration kann bevorzugt optisch bestimmt werden. Sie kann insbesondere für die Bestimmung von Permeationsraten von Folien oder Feststoffe für bestimmte ausgewählte Moleküle oder Atome von Stoffen bzw. chemischen Elementen oder Verbindungen eingesetzt werden. Es kann auch eine Desorptionsrate bestimmt werden.

Eine andere Anwendung kann eine Abdichtung von Kammern, in den chemische Reaktionen durchgeführt oder gar unerwünschte Reaktionen, die in Folge eingedrungener Stoffe auftreten könnten, vermieden werden sollen, sein.

Üblicherweise wird die optische Konzentrationsbestimmung mit Spektrometern durchgeführt und dabei elektromagnetische Strahlung von einer Quelle, durch ein in der jeweiligen Messzelle enthaltenes Fluid auf einen optischen Detektor oder ein Spektrometer gerichtet, so dass ein im Fluid enthaltener Stoff oder durch eine Folie diffundierter Stoff optisch detektiert werden kann.

Die Anforderungen an die Mess- und Nachweisgenauigkeit sind dabei ständig gestiegen. Es ist daher dafür Sorge zu tragen, dass keine Fremdkontaminationen in eine Messzelle gelangen und das Bestimmungsergebnis beeinflussen können.

Insbesondere bei einer Permeationsratenbestimmung erfolgen die Messungen über einen längeren Zeitraum, so dass ein Eindringen von Stoffen oder Feuchtigkeit in die eigentliche Messzelle von außen in Folge von Leckagen oder Diffusionsprozesse bzw. der Permeation durch Dichtungswerkstoffe vermieden werden soll.

Bei der Permeationsratenbestimmung von Membranen, Feststoffen oder Folien können keine metallischen Dichtelemente eingesetzt werden, da Beschädigungen nicht ausgeschlossen werden können.

Aus diesem Grunde werden weiche Elastomere für die Abdichtung von Messzellen eingesetzt. Diese Elastomere sind jedoch für viele die Messungen beeinflussenden Stoffe, wie z.B. Wasserdampf oder Sauerstoff durchlässig. Gerade diese Stoffe sind jedoch in der umgebenden Atmosphäre in hoher Konzentration enthalten, so dass sie bei einer Konzentrationsbestimmung oder der Bestimmung einer tatsächlichen Permeationsrate der jeweiligen Moleküle oder Atome zu Messfehlern führen können, wenn sie durch eine Dichtung in die Messzelle gelangen.

Um diesen Fehlern entgegen zu wirken hat man Dichtelemente über längere Zeiträume vor dem Einsatz konditioniert, um im Dichtungswerkstoff adsorbierte, die Messungen störenden Stoffe bei erhöhter Temperatur und in gespülten Behältnissen in inerter Atmosphäre zu desorbieren.

Eine vollständige Desorption oder eine erneute Adsorption während des Einbaus einer Dichtung kann jedoch nicht erreicht bzw. vermieden werden.

In einer weiteren Alternative kann eine Abdichtung mittels Vakuumfett vorgenommen werden. Aber auch damit kann das vorab erwähnte Adsorptions- und Desorptionsproblem nicht beseitigt werden. Außerdem können nicht ohne weiteres reproduzierbare Verhältnisse eingehalten werden, da keine gleichmäßige konstante Dichtungsschicht nach dem Verschließen einer Messzelle erreichbar ist.

Die genannten Probleme wirken sich besonders bei Nachweisgrenzen, die kleiner als 1^{∗}10⁻³ g [H₂O] m⁻²d⁻¹ sein sollen, aus. Das Problem tritt auch bei kritischen Molekülen, wie z.B. Wasser, Sauerstoff oder Methan auf.

In US 3,590,634 A ist ein Instrument zur Bestimmung von Permeationsraten durch eine Membran beschrieben.

WO 2011/026879 A1 betrifft einen Rahmen zum Tragen einer Filtermembran.

Eine Vorrichtung zur Prüfung der Permeation mit einem Massenspektrometer ist in US 2008/0060418 A1 offenbart.

Eine zur Bestimmung der Permeabilität ausgebildete Vorrichtung und ein entsprechendes Verfahren sind aus US 3,431,772 A bekannt.

US 3,618,361 A betrifft ein Verfahren und eine Vorrichtung zur Bestimmung der Permeabilität eines Filmes.

Ein Gerät zum gleichzeitigen Messen der senkrechten und radialen Flüssigkeitspermeabilität ist in DE 10 2008 056 634 A1 beschrieben.

FR 2 715 471 A1 beschreibt eine Vorrichtung zum Messen der Permeabilität einer flachen Probe.

Eine Vorrichtung zur Bestimmung der Permeabilität von festen Gegenständen unter bestimmten Bedingungen ist in US 4,304,122 A offenbart.

Es ist daher Aufgabe der Erfindung, Möglichkeiten vorzuschlagen mit denen ein Eindringen von Stoffen in Fluid enthaltende Kammern von außen weitestgehend vermieden werden kann.

Erfindungsgemäß wird diese Aufgabe mit einer Abdichtung, die mit den Merkmalen des Anspruchs 1 ausgebildet ist, gelöst. Vorteilhafte Ausgestaltungen und Weiterbildungen der Erfindung können mit Anwendung von in untergeordneten Ansprüchen genannten Merkmalen realisiert werden.

Bei einem erfindungsgemäßen Abdichtungssystem einer Kammer, die in einem aus mindestens zwei Teilen gebildeten Gehäuse ausgebildet ist, ist zwischen den Teilen des Gehäuses umlaufend um die Kammer eine bevorzugt aus einem Polymer gebildete Flachdichtung eingelegt. Üblicherweise werden die Teile des Gehäuses mit Druckkraftbeaufschlagung gegeneinander gepresst und dadurch die Dichtung vorgespannt. Zumindest im Bereich umlaufend um die Kammer ist mindestens ein in Richtung auf die Flachdichtung offener Kanal in mindestens einem Teil des Gehäuses ausgebildet, durch den abgeführtes Fluid so geführt werden kann, dass abgeführtes Fluid unmittelbar an einer Oberfläche der Flachdichtung entlang strömt.

Es kann aber auch zwischen die Teile eines Gehäuses eine Folie eingelegt sein, die die Kammer in zwei Kavitäten trennt. Dies kann insbesondere bei der Bestimmung von Permeationsraten der Fall sein. Eine Kavität der Kammer kann dann eine Messzelle bzw. einen Prozessraum bilden und die andere Kavität für die Permeatbereitstellung genutzt werden. Die Folie kann dabei zusätzlich zur Flachdichtung eingelegt sein. Es kann aber auch auf eine Flachdichtung verzichtet werden und deren Abdichtfunktion von der Folie mit erfüllt werden. Abgeführtes Fluid strömt dann entlang der Oberfläche der Folie durch mindestens einen Kanal.

In einer weiteren erfindungsgemäßen Alternative kann allein oder zusätzlich mindesten ein solcher Kanal an oder auch in der Flachdichtung ausgebildet sein. Ein oder mehrere Kanäle einer Flachdichtung können mindestens eine freie Öffnung aufweisen, die eine Öffnung in Richtung eine Dichtfläche mindestens eines Teils des Gehäuses bildet.

Eine solche Öffnung kann auch in Richtung eines offenen in einem Teil des Gehäuses ausgebildeten Kanals weisen und so angeordnet sein, dass beide Kanäle gemeinsam einen größeren freien Querschnitt erreichen, durch den abgeführtes Fluid strömen kann.

Ein oder mehrere Kanäle können aber auch innerhalb der Flachdichtung ausgebildet und vom Flachdichtungswerkstoff umschlossen sein. An jedem einzelnen Kanal ist dann, bevorzugt an den Enden, jeweils eine Ein- und eine Auslassöffnung für abgeführtes Fluid vorhanden.

Nachfolgend zu in einem Teil des Gehäuses ausgebildete Kanäle getroffene Aussagen, sollen zumindest sinngemäß auch auf an/in Flachdichtungen ausgebildete Kanäle zutreffen.

Mit der Erfindung kann nachhaltig das Eindringen störender Stoffe durch die Dichtung vermieden werden. Durch ein stetiges Spülen in dem/den Kanal/Kanälen kann im Dichtungswerkstoff adsorbiertes störendes Gas oder ein solcher Stoff schneller und besser desorbiert werden, als dass sich ein Diffusionsgleichgewicht außerhalb des Dichtungswerkstoffs einstellen kann. Von der Dichtung desorbierte Stoffe können mit abgeführten Fluid nach außen abgeführt werden, so dass sie die Messungen oder Reaktionen nicht beeinflussen können.

Dabei kann ein geeigneter Volumenstrom an abgeführtem Fluid, der durch den Kanal oder mehrere Kanäle strömt, gewählt werden, um störende Stoffe sicher austragen zu können.

Bei der Erfindung kann ein einziger Kanal spiralförmig in mehreren Wicklungen umlaufend um die Kammer ausgebildet sein. An einem solchen Kanal können eine Ein- und eine Auslassöffnung für abgeführtes Fluid an jeweils einem Ende vorhanden sein. Bevorzugt strömt dabei abgeführtes Fluid ausgehend von der Kammer nach außen. Dadurch kann ein entsprechender Konzentrationsgradient im abgeführten Fluid eingehalten werden, bei dem die Konzentration störender Stoffe ausgehend von der Kammer nach außen ansteigen kann und dementsprechend in unmittelbarer Nähe der Kammer die geringste Konzentration störender Stoffe vorhanden ist.

Analog kann auch so vorgegangen werden, dass mehrere Kanäle umlaufend um die Kammer ausgebildet sind und dann eine Austrittsöffnung eines Kanals mit einer Einlassöffnung eines anderen Kanals verbunden ist oder ein Kanal in einen anderen Kanal mündet.

Bevorzugt weist ein Kanal oder mehrere Kanäle weisen an der offenen Seite, die in Richtung der Flachdichtung weist, eine Spaltbreite auf, die mindestens dem Zehnfachen der Dicke, bevorzugt dem Zehnfachen der Dicke der Flachdichtung entspricht. Dadurch kann eine sehr große Konzentrationsdifferenz störender Stoffe im Dichtungswerkstoff und abgeführtem Fluid erreicht werden, was wiederum dazu führt, dass störende Stoffe aus dem Dichtungswerkstoff in das abgeführte Fluid gelangen und dadurch aus dem kritischen Bereich entfernt werden können.

Bei der Erfindung können aber auch mehrere Kanäle in einem Abstand zueinander angeordnet und dabei an jedem einzelnen Kanal gesonderte Ein- und Auslassöffnungen für abgeführtes Fluid vorhanden sein. Dadurch kann in jeden einzelnen Kanal gesondert und unabhängig voneinander abgeführtes Fluid einströmen und aus diesem ausströmen.

Mehrere Kanäle können auch an jeweils gegenüberliegenden Seiten der Flachdichtung angeordnet sein. Sie können dabei in unterschiedlichen Teilen des Gehäuses ausgebildet worden sein, die mittels der Flachdichtung voneinander getrennt sind.

In diesem Fall aber auch bei einer Ausbildung von mehreren Kanälen in einem Teil des Gehäuses können die Kanäle mit unterschiedlichem Abstand zum äußeren Rand der Kammer angeordnet sein.

Kanäle können dabei durch verbliebene Stege des Gehäuses voneinander getrennt sein.

Bei der Erfindung kann die Flachdichtung aus einem Polymer gebildet sein, das ausgewählt ist aus PV, EPDM, FKM, PTFE, PE und PP.

Die einsetzbaren Polymere gewährleisten eine Abdichtung und vermeiden eine Beschädigung der Dichtflächen an den Teilen des Gehäuses. Nach Beendigung einer Konzentrations- oder Permeationsratenbestimmung und dem ggf. dabei durchgeführten Öffnen einer Kammer kann eine Flachdichtung gegen eine neue ausgetauscht werden. Dann kann vor dem Beginn einer neuen Messung über einen Zeitraum Spülgas durch den/die Kanal/Kanäle strömen, um eine Konditionierung der neuen Flachdichtung zu erreichen, indem im/am Dichtungswerkstoff enthaltene oder adsorbierte die Messung oder eine Reaktion störende Stoffe, insbesondere durch Desorption entfernt und nach außen in die Umgebung abgeführt werden können.

Die Dicke der Flachdichtung sollte kleiner sein, als die Breite des/der Kanals/Kanäle an seiner in Richtung Kanal weisenden offenen Seite und über die gesamte Dichtfläche konstant gehalten sein. Es ist eine vollständig ebene Ausbildung von Flachdichtungen zu bevorzugen und dabei keine Oberflächenkonturen daran vorhanden sein.

Die geometrische Gestalt des freien Querschnitts kann unterschiedlichst gewählt sein. Es ist lediglich erforderlich, ausreichend große Kontaktflächen für das an der Flachdichtung vorbeiströmendes abgeführtes Fluid und einen usreichend großen Volumenstrom davon zu gewährleisten. Kanäle können z.B. rechteckige, v-förmige oder teilkreisförmige Querschnitte aufweisen.

Mit der Erfindung ist eine sichere Abdichtung einer Kammer gegenüber äußeren Einflüssen möglich und das Eindringen störender Stoffe kann weitestgehend vermieden werden, so dass auch kleinste Konzentrationen innerhalb einer Kammer in einem Fluid hochgenau detektiert werden können.

Die Erfindung kann für die Bestimmung der Konzentration von in Flüssigkeiten oder Gasen enthaltenen Stoffen eingesetzt werden. Die jeweilige Flüssigkeit oder das Gas sollte dabei bei einer optischen Bestimmung für die eingesetzte elektromagnetische und auf einen Detektor oder ein Spektrometer gerichtete Strahlung transparent sein.

Nachfolgend soll die Erfindung beispielhaft näher erläutert werden.

Dabei zeigen:
Figur 1 in schematischer Form und im Schnitt ein Beispiel einer nicht zur Erfindung gehörenden Abdichtung an einer Kammer zur Bestimmung der Permeationsrate und
Figur 2 eine Draufsicht auf ein ebenfalls nicht zur Erfindung gehörendes Beispiel mit einem spiralförmig ausgebildetem Kanal.

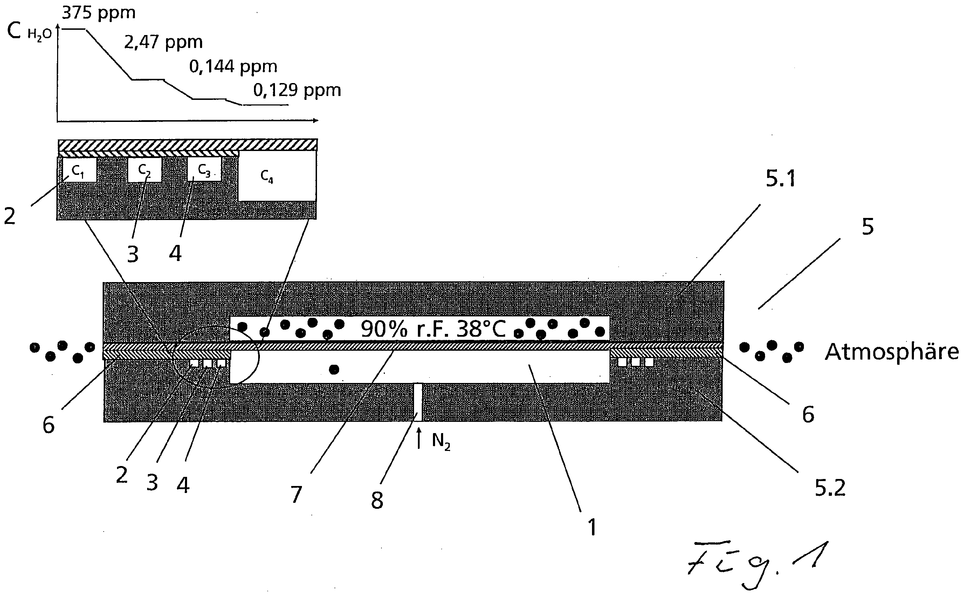

In Figur 1 ist eine Kammer 1 in der die Permeationsrate einer Folie 7 bestimmt werden kann, gezeigt. Auf die Darstellung der für die optische Bestimmung erforderlichen Elemente ist verzichtet worden.

Die Kammer 1 ist in einem mit zwei Teilen 5.1 und 5.2 gebildeten Gehäuse 5 als mittels der Folie 7 zweigeteilter Hohlraum ausgebildet. Die Folie 7 ist zwischen den beiden Teilen 5.1 und 5.2 des Gehäuses 5 gehalten. Die Teile 5.1 und 5.2 können in herkömmlicher Form miteinander verbunden sein und dabei kann eine geeignete Anpresskraft wirken.

Zwischen den Teilen 5.1 und 5. 2 des Gehäuses 5 ist die Kammer 1 vollständig umschließend die Flachdichtung 6 an einer Seite der Folie eingelegt und ebenso verspannt, wie die Folie 7.

Bei dem gezeigten Beispiel sind umlaufend um die Kammer 1 Kanäle 2, 3 und 4 in einem Teil 5.2 des Gehäuses 5 mit jeweils größer werdenden Abstand vom äußeren Rand der Kammer 1 ausgebildet. Dieses Teil 5.2 des Gehäuses 5 bildet die Wandung des Bereichs der Kammer 1 in dem die eigentliche optische Konzentrationsbestimmung durchgeführt wird.

Die Kanäle 2, 3 und 4 werden von Stickstoff als inertem Spülgas durchströmt. Stickstoff kann dabei in die Kanäle 2, 3 und 4 über eine Einlassöffnung ein und aus jeweils einer Auslassöffnung ausströmen. Dabei muss das Spülgas in jedem Kanal 2, 3 und 4 nicht vollständig um die gesamte Kammer 1 strömen. Die Ein- und Auslassöffnungen können so angeordnet sein, dass die Kammer 1 zumindest mit 75 % ihres Umfangs in den einzelnen Kanälen 2, 3 und 4 umströmt werden kann. Die Ein- und Auslassöffnungen der Kanäle 2, 3 und 4 können dabei über den Umfang versetzt zueinander angeordnet werden.

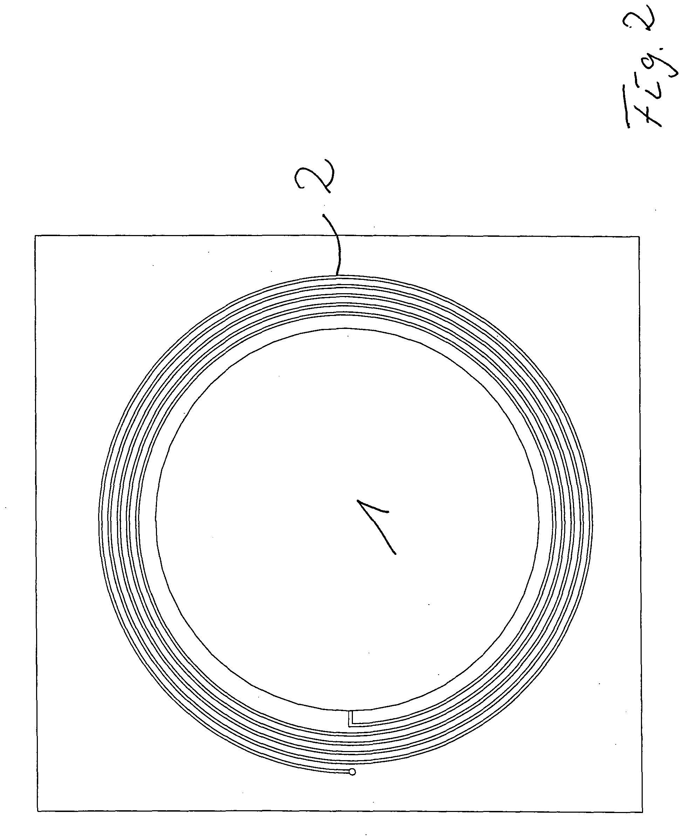

Bei der Darstellung des Beispiels in Figur 1 kann es sich aber auch um einen einzigen Kanal 2 handeln, der spiralförmig um die Kammer 1 ausgebildet ist. Dabei kann inertes Spülgas durch eine Einlassöffnung in den Kanal 2 einströmen, die so angeordnet ist, dass sie am nächsten zum äußeren Rand der Kammer 1 angeordnet ist und dann das Spülgas von dort durch den gesamten Kanal 2 bis zu einer Auslassöffnung strömt, die radial am weitesten nach außen von der Kammer 1 gesehen angeordnet ist. Ein so ausgebildetes Beispiel kann der in Figur 2 gezeigten Draufsicht entnommen werden.

Mit Figur 1 soll weiter verdeutlicht werden, dass innerhalb der Kammer 1 an einer Seite der Folie 7 eine Gasatmosphäre mit einer relativen Feuchtigkeit von 90 % bei einer Temperatur von 38 °C enthalten sein kann und die Permeationsrate für Wasserdampf der Folie 7 bestimmt werden soll. Die Feuchtigkeit in der Umgebungsatmosphäre betrug 50 % bei einer Temperatur von 38 °C.

Auf der anderen Seite der Folie 7 wird über einen Einlass 8 Stickstoff in die Kammer 1 zugeführt. In diesem Teil der Kammer 1 erfolgt dann die optische Bestimmung der Konzentration von Wasser zeitaufgelöst.

Der eingekreiste Bereich ist in vergrößerter Form links oberhalb dargestellt und das Diagramm gibt für die Kanäle 2, 3 und 4 die jeweilige Konzentration von Wasser im jeweiligen Kanal 2, 3 und 4 wieder. Es ist erkennbar, dass die Wasserkonzentration in Richtung auf den äußeren Rand der Kammer 1 in den Kanälen 2, 3 und 4 abnimmt. Dadurch kann verhindert werden, dass Feuchtigkeit /Wasser oder auch andere Stoffe in die Kammer 1, zumindest mit einem Anteil, der die Messungen unzulässig beeinträchtigt, gelangen kann/können.

In Analogie dazu können die in Figur 1 dargestellten Konzentrationen C₁ bis C₄ auch an dementsprechenden Positionen eines spiralförmig ausgebildeten Kanals 2, wie in Figur 2 gezeigt, auftreten.

## Patentansprüche

1. Abdichtungssystem für eine Vorrichtung zur Bestimmung einer Permeationsrate oder einer Desorptionsrate von Folien oder Feststoffen mit einer ein Fluid enthaltenden Kammer (1), dabei die Kammer (1) in einem aus mindestens zwei Teilen (5.1, 5.2) gebildeten Gehäuse (5) ausgebildet ist und zwischen den Teilen (5.1, 5.2) des Gehäuses umlaufend um die Messzelle eine Flachdichtung (6) und/oder eine die Kammer (1) in zwei Kavitäten trennende Folie (7) eingelegt ist,
zumindest im Bereich umlaufend um die Kammer (1) mindestens ein in Richtung auf die Flachdichtung (6) in Richtung einer Dichtfläche mindestens eines Teils des Gehäuses (5) oder die Folie (7) offener Kanal (2, 3, 4) in mindestens einem Teil (5.1 oder 5.2) des Gehäuses (5) ausgebildet ist und/oder
die Flachdichtung (6) mindestens einen Kanal (2,3,4) aufweist, und
die Kammer (1) mit der zwischen die Teile (5.1, 5.2) des Gehäuses (5) eingelegten Folie (7) in eine Kavität als Messzelle und in eine Kavität für die Permeatbereitstellung getrennt ist,
**dadurch gekennzeichnet, dass**
aus der Messzelle abgeführtes Fluid in eine Einlassöffnung einführbar, durch den/die Kanal/Kanäle (2, 3, 4) so führbar ist, dass abgeführtes Fluid unmittelbar an einer Oberfläche der Flachdichtung (6) und/oder der Folie (7) entlang strömt und
aus einer oder mehreren Auslassöffnung(en) eines oder mehrerer Kanals/Kanäle (2, 3, 4) ausströmt. 11

2. Abdichtungssystem nach Anspruch 1, **dadurch gekennzeichnet, dass** ein Kanal (2) spiralförmig in mehreren Wicklungen umlaufend um die Kammer (1) ausgebildet ist und eine Ein- und eine Auslassöffnung für abgeführtes Fluid an jeweils einem Ende des Kanals (2) vorhanden sind.

3. Abdichtungssystem nach Anspruch 1 oder 2, **dadurch gekennzeichnet, dass** der/die Kanal/Kanäle (2, 3, 4) an der offenen Seite eine Spaltbreite aufweist/aufweisen, die mindestens dem Zehnfachen der Dicke der Flachdichtung (6) entspricht.

4. Abdichtungssystem nach einem der vorhergehenden Ansprüche, **dadurch gekennzeichnet, dass** die Dicke der Flachdichtung (6) oder der Folie (7) kleiner ist, als die Breite des/der Kanals/Kanäle (2, 3, 4) an seiner/ihrer in Richtung Kanal weisenden offenen Seite.

5. Abdichtungssystem nach einem der vorhergehenden Ansprüche, **dadurch gekennzeichnet, dass** mehrere Kanäle (2, 3, 4) in einem Abstand zueinander angeordnet sind und an jedem einzelnen Kanal (2, 3, 4) gesonderte Ein- und Auslassöffnungen für abgeführtes Fluid vorhanden sind.

6. Abdichtungssystem nach einem der vorhergehenden Ansprüche, **dadurch gekennzeichnet, dass** Kanäle (2, 3, 4) an jeweils gegenüberliegenden Seiten der Flachdichtung (6) und/oder der Folie (7) angeordnet sind.

7. Abdichtungssystem nach Anspruch 5, **dadurch gekennzeichnet, dass** Kanäle (2, 3, 4) mit unterschiedlichem Abstand zum äußeren Rand der Messzelle, die eine von zwei Kavitäten der Kammer (1) im Gehäuse (5) darstellt, an den gegenüberliegenden Seiten angeordnet sind.

8. Abdichtungssystem nach einem der vorhergehenden Ansprüche, **dadurch gekennzeichnet, dass** Ein- und Auslassöffnungen an Kanälen (2, 3, 4) so angeordnet sind, dass abgeführtes Fluid in entgegen gesetzter Strömungsrichtung die Kanäle (2, 3, 4) durchströmt.

9. Abdichtungssystem nach einem der vorhergehenden Ansprüche, **dadurch gekennzeichnet, dass** eine Austrittsöffnung eines Kanals (2, 3, oder 4) mit einer Einlassöffnung eines anderen Kanals (2, 3 oder 4) verbunden ist oder ein Kanal (2, 3 oder 4) in einen anderen Kanal (2, 3 oder 4) mündet.

10. Abdichtungssystem nach einem der vorhergehenden Ansprüche, **dadurch gekennzeichnet, dass** die Flachdichtung (6) aus einem Polymer gebildet ist, das ausgewählt ist aus PV, EPDM, FKM, PTFE, PE und PP.

11. Abdichtungssystem nach einem der vorhergehenden Ansprüche, **dadurch gekennzeichnet, dass** der/die Kanal/Kanäle (2, 3, 4) in einer Flachdichtung (6) ausgebildet ist/sind und mindestens eine freie Öffnung in Richtung eines Teils eines Gehäuses (5) vorhanden ist.

12. Abdichtungssystem nach Anspruch 11, **dadurch gekennzeichnet, dass** eine freie Öffnung eines Kanals (2, 3, 4) in Richtung eines offenen in einem Teil (5.1, 5.2) des Gehäuses (5) ausgebildeten Kanals (2, 3, 4) weist.

13. Abdichtungssystem nach einem der vorhergehenden Ansprüche, **dadurch gekennzeichnet, dass** mindestens ein in der Flachdichtung ausgebildeter Kanal (2, 3, 4) vom Flachdichtungswerkstoff umschlossen ist und lediglich eine Ein- und Auslassöffnung für abgeführtes Fluid an einem Kanal (2, 3, 4) vorhanden sind.

14. Abdichtungssystem nach einem der vorhergehenden Ansprüche, **dadurch gekennzeichnet, dass** die Permeationsrate einer innerhalb der Kammer (1) angeordneten Folie (7) oder eines Feststoffs bestimmbar ist.

## Claims

1. Sealing system for a device for determining a permeation rate or a desorption rate of films or solids with a fluid-containing chamber (1), the chamber (1) being formed in a housing (5) which is formed from at least two parts (5.1, 5.2) and there being placed between the parts (5.1, 5.2) of the housing a flat seal (6), circumferentially around the measurement cell, and/or a film (7) which separates the chamber (1) into two cavities, at least in the region extending circumferentially around the chamber (1) there being formed at least one channel (2, 3, 4), which is open in the direction of the flat seal (6), in the direction of a sealing surface of at least one part of the housing (5), or the film (7), in at least one part (5.1 or 5.2) of the housing (5) and/or the flat seal (6) having at least one channel (2, 3, 4), and the chamber (1) being separated into a cavity, serving as a measurement cell, and into a cavity, for the provision of permeate, by the film (7) placed between the parts (5.1, 5.2) of the housing (5), **characterized in that** fluid removed from the measurement cell can be introduced into an inlet opening and can be conducted through the channel(s) (2, 3, 4) such that removed fluid flows directly along a surface of the flat seal (6), and/or of the film (7), and out of one or more outlet opening(s) of one or more channel(s) (2, 3, 4).

2. Sealing system according to Claim 1, **characterized in that** a channel (2) is formed so as to extend circumferentially with multiple windings in a spiral-shaped manner around the chamber (1), and an inlet opening and an outlet opening for removed fluid are present at in each case one end of the channel (2).

3. Sealing system according to Claim 1 or 2, **characterized in that** the channel(s) (2, 3, 4) has/have on the open side a gap width which corresponds to at least ten times the thickness of the flat seal (6).

4. Sealing system according to one of the preceding claims, **characterized in that** the thickness of the flat seal (6) or of the film (7) is less than the width of the channel(s) (2, 3, 4) on its/their open side which faces in the direction of the channel.

5. Sealing system according to one of the preceding claims, **characterized in that** multiple channels (2, 3, 4) are arranged with a spacing to one another, and separate inlet and outlet openings for removed fluid are present at each individual channel (2, 3, 4).

6. Sealing system according to one of the preceding claims, **characterized in that** channels (2, 3, 4) are arranged on in each case opposite sides of the flat seal (6) and/or of the film (7).

7. Sealing system according to Claim 5, **characterized in that** channels (2, 3, 4) are arranged with a different spacing to the outer boundary of the measurement cell, which constitutes one of two cavities of the chamber (1) in the housing (5), on the opposite sides.

8. Sealing system according to one of the preceding claims, **characterized in that** inlet and outlet openings are arranged in channels (2, 3, 4) such that removed fluid flows through the channels (2, 3, 4) in an opposite flow direction.

9. Sealing system according to one of the preceding claims, **characterized in that** an outlet opening of one channel (2, 3 or 4) is connected to an inlet opening of another channel (2, 3 or 4), or one channel (2, 3 or 4) opens into another channel (2, 3 or 4).

10. Sealing system according to one of the preceding claims, **characterized in that** the flat seal (6) is formed from a polymer which is selected from PV, EDPM, FKM, PTFE, PE and PP.

11. Sealing system according to one of the preceding claims, **characterized in that** the channel(s) (2, 3, 4) is/are formed in a flat seal (6), and at least one free opening in the direction of one part of a housing (5) is present.

12. Sealing system according to Claim 11, **characterized in that** a free opening of a channel (2, 3, 4) faces in the direction of an open channel (2, 3, 4) which is formed in one part (5.1, 5.2) of the housing (5).

13. Sealing system according to one of the preceding claims, **characterized in that** at least one channel (2, 3, 4) formed in the flat seal is surrounded by the flat seal material, and merely an inlet opening and outlet opening for removed fluid are present at a channel (2, 3, 4).

14. Sealing system according to one of the preceding claims, **characterized in that** the permeation rate of a film (7) arranged within the chamber (1) or of a solid can be determined.

## Revendications

1. Système de scellement pour un dispositif de détermination d'un taux de perméation ou d'un taux de désorption de films ou de matières solides avec une chambre (1) contenant un fluide,
dans lequel la chambre (1) est constituée dans un logement (5) formé d'au moins deux parties (5.1, 5.2), et un joint plat (6) et/ou un film (7) séparant la chambre (1) en deux cavités est inséré entre les parties (5.1, 5.2) du logement sur le pourtour de la cellule de mesure,
dans lequel, au moins dans la zone sur le pourtour de la chambre (1), au moins un canal (2, 3, 4) ouvert vers le joint plat (6) en direction d'une surface d'étanchéité d'au moins une partie du logement (5) ou vers le film (7) est constitué dans au moins une partie (5.1 ou 5.2) du logement (5),
et/ou le joint plat (6) comporte au moins un canal (2, 3, 4), et la chambre (1) est, avec le film (7) inséré entre les parties (5.1, 5.2) du logement (5), séparée en une cavité en tant que cellule de mesure et en une cavité pour la fourniture du perméat,
**caractérisé en ce que**
du fluide évacué de la cellule de mesure peut être introduit dans une ouverture d'entrée, peut être conduit à travers le canal/les canaux (2, 3, 4) de sorte que le fluide évacué s'écoule directement le long d'une surface du joint plat (6) et/ou du film (7), et
s'écoule à partir d'une ou de plusieurs ouverture(s) de sortie d'un ou de plusieurs canal/canaux (2, 3, 4).

2. Système de scellement selon la revendication 1, **caractérisé en ce qu'**un canal (2) est constitué en spirale en plusieurs enroulements sur le pourtour de la chambre (1), et **caractérisé par** la présence d'une ouverture d'entrée et d'une ouverture de sortie pour le fluide évacué à chaque extrémité du canal (2).

3. Système de scellement selon la revendication 1 ou 2, **caractérisé en ce que** les/les canal/canaux (2, 3, 4) comporte(ent) au niveau du côté ouvert une largeur d'interstice qui correspond au moins à dix fois l'épaisseur du joint plat (6).

4. Système de scellement selon l'une des revendications précédentes, **caractérisé en ce que** l'épaisseur du joint plat (6) ou du film (7) est plus petite que la largeur du/des canal/canaux (2, 3, 4) sur son/leur côté ouvert en direction du canal.

5. Système de scellement selon l'une des revendications précédentes, **caractérisé en ce que** plusieurs canaux (2, 3, 4) sont disposés à distance les uns des autres, et **caractérisé par** la présence, au niveau de chaque canal (2, 3, 4) individuel, d'ouvertures d'entrée et de sortie séparées pour le fluide évacué.

6. Système de scellement selon l'une des revendications précédentes, **caractérisé en ce que** des canaux (2, 3, 4) sont disposés sur des côtés respectivement opposés du joint plat (6) et/ou du film (7).

7. Système de scellement selon la revendication 5, **caractérisé en ce que** des canaux (2, 3, 4) avec un espacement différent par rapport au bord extérieur de la cellule de mesure qui constitue l'une des deux cavités de la chambre (1) dans le logement (5) sont disposés sur les côtés opposés.

8. Système de scellement selon l'une des revendications précédentes, **caractérisé en ce que** des ouvertures d'entrée et de sortie sont disposées sur des canaux (2, 3, 4) de telle sorte que le fluide évacué parcourt les canaux (2, 3, 4) dans une direction d'écoulement opposée.

9. Système de scellement selon l'une des revendications précédentes, **caractérisé en ce qu'**une ouverture de sortie d'un canal (2, 3 ou 4) est raccordée à une ouverture d'entrée d'un autre canal (2, 3 ou 4), ou un canal (2, 3 ou 4) débouche dans un autre canal (2, 3 ou 4).

10. Système de scellement selon l'une des revendications précédentes, **caractérisé en ce que** le joint plat (6) est formé d'un polymère qui est choisi parmi PV, EPDM, FKM, PTFE, PE et PP.

11. Système de scellement selon l'une des revendications précédentes, **caractérisé en ce que** le/les canal/canaux (2, 3, 4) est/sont constitué(s) dans un joint plat (6), et **caractérisé par** la présence d'au moins une ouverture libre dirigée vers une partie d'un logement (5).

12. Système de scellement selon la revendication 11, **caractérisé en ce qu'**une ouverture libre d'un canal (2, 3, 4) est dirigée vers un canal (2, 3, 4) ouvert constitué dans une partie (5.1, 5.2) du logement (5).

13. Système de scellement selon l'une des revendications précédentes, **caractérisé en ce qu'**au moins un canal (2, 3, 4) constitué dans le joint plat est entouré par le matériau du joint plat, et **caractérisé par** la présence sur un canal (2, 3, 4) de seulement une ouverture d'entrée et une ouverture de sortie pour le fluide évacué.

14. Système de scellement selon l'une des revendications précédentes, **caractérisé en ce que** le taux de perméation d'un film (7) ou d'une matière solide disposé(e) à l'intérieur de la chambre (1) peut être déterminé.
